# EUROPÄISCHE PATENTSCHRIFT

(11) **EP 4 341 501 B1**
(45) Veröffentlichungstag und Bekanntmachung des Hinweises auf die Patenterteilung: **22.04.2026**
(21) Anmeldenummer: 22729072.3
(22) Anmeldetag: 11.05.2022
(51) Int. Cl.: E03C 1/04, E03C 1/05, H05B 47/175

(54) **SANITÄRRAUM EINES GEBÄUDES**
SANITARY ROOM OF A BUILDING
PIÈCE SANITAIRE D'UN BÂTIMENT

(30) Priorität: 20.05.2021 DE 102021113091
(43) Veröffentlichungstag der Anmeldung: 27.03.2024
(73) Patentinhaber: Jomoo Kitchen & Bath Deutschland GmbH, 80807 Munich (DE)
(72) Erfinder: DÜCK, Johann, 82256 Fürstenfeldbruck (DE); KREUZER, Fabian, 80802 München (DE); RICHTER, Thomas, 81667 München (DE); MOHRICH, Benjamin, 80636 München (DE); GEMMECKE, Daniel, 80803 München (DE); HONG, Muya, 80339 München (DE); XIAOWEI, Lin, Xiamen, Fujian 361006 (CN)
(74) Vertreter: Grättinger Möhring von Poschinger Patentanwälte Partnerschaft mbB
(86) Internationale Anmeldenummer: PCT/EP2022/062733
(87) Internationale Veröffentlichungsnummer: WO 2022/243124

(56) Entgegenhaltungen:
- WO-A1-2008/130349
- DE-A1- 102016 104 793
- US-A1- 2019 274 485

## Beschreibung

Die vorliegende Erfindung betrifft, wie im Oberbegriff des Anspruchs 1 angegeben, einen Sanitärraum eines Gebäudes, mit einem Personen-Zugang, mindestens einer Sanitärstation, einer Beleuchtungseinrichtung und einer Soundeinrichtung, wobei die Sanitärstation eine Sanitär-Einrichtung mit einem Kaltwasser-Zulauf, einem Warmwasser-Zulauf, mindestens einem Wasser-Auslass und einer Dosier- und Mischventileinheit, welche zur Beeinflussung des Gesamtdurchflusses durch den Wasser-Auslass und des Verhältnisses der Kaltwasser-Teilmenge und der Warmwasser-Teilmenge zueinander an dem Gesamtdurchfluss geeignet ist, aufweist und auf die Dosier- und Mischventileinheit, die Beleuchtungseinrichtung und die Soundeinrichtung eine programmierbare elektronische Steuerung einwirkt, wobei die programmierbare elektronische Steuerung einen zur abrufbaren Hinterlegung mehrerer unterschiedlicher Wasserabgabeprogramme geeigneten Wasser-Programmspeicher, einen zur abrufbaren Hinterlegung mehrerer unterschiedlicher Beleuchtungsprogramme geeigneten Beleuchtungs-Programmspeicher, einen zur abrufbaren Hinterlegung mehrerer unterschiedlicher Soundprogramme geeigneten Sound-Programmspeicher und mindestens eine Datenverarbeitungseinheit aufweist, welche mindestens einen Aktor der Dosier- und Mischventileinheit, mindestens einen Leuchtmittelregler und mindestens einen Soundgenerator betätigt, wobei weiterhin die Sanitärstation eine der Sanitär-Einrichtung zugeordnete, die Wasserabgabeprogramm-Auswahl sowie die manuelle Modifikation des ausgewählten Wasserabgabeprogramms ermöglichende Geräte-Benutzerschnittstelle umfasst.

Die Patentliteratur beschäftigt sich bereits seit langem mit programmgesteuerten Sanitär-Einrichtungen, insbesondere programmgesteuerten Duschen. Zu verweisen ist beispielsweise auf DE 197 02 358 A1, EP 3 705 642 A1, US 2017/0350103 A1, EP 3 088 613 A1, US 9,085,881 B2, US Re. 35,018 E, US 4,563,780 A, US 4,756,030 A, DE 10 2016 104 793 B4, US 10,745,893 B2 und EP 2 649 246 B1. Dabei umfasst die elektronische Steuereinheit einen zur abrufbaren Hinterlegung mehrerer unterschiedlicher Wasserabgabeprogramme (Duschprogramme) geeigneten Programmspeicher und eine zentrale Datenverarbeitungseinheit, welche gemäß jenem Wasserabgabeprogramm auf mindestens einen die Dosier- und Mischventileinheit betätigenden Aktuator einwirkt. Die Auswahl des jeweils durchzuführenden Duschprogramms soll dabei manuell oder teil- bzw. vollautomatisch (z. B. unter Einbindung einer automatischen Benutzer-Identitätserkennung oder Benutzer-Zustandserkennung) erfolgen können. Teilweise (vgl. insbesondere EP 3 705 642 A1) soll dabei das aufgerufene Wasserabgabeprogramm weitere Parameter berücksichtigen bzw. variieren, wie verschiedene Beleuchtungseffekte, am Duschort abspielbare Musik, andere Akustik und/oder Videos und/oder am Duschort bereitstellbare Dufteffekte etc.

Die vorstehend bereits identifizierte DE 10 2016 104 793 A1 offenbart dabei einen - eine Nasszelle aufweisenden - Sanitärraum der gattungsgemäßen Art. Dabei ist ein an der vom Nassbereich abgewandten Seite einer freistehenden Begrenzungswand der Nasszelle angeordnetes Steuerungsmodul vorgesehen, über das sich Wassertemperatur, Wasserverteilung, Trocknungsfunktion, Audio- und/oder visuelle Medien, Beleuchtung, Geruch und/oder Temperatur steuern lassen. Das Steuerungsmodul weist einen dem Innenraum des Nassbereichs zugewandten Frontbereich mit zumindest einem Interaktionsbereich, insbesondere in Form eines Touchscreens bzw. GUIs mit einer Mehrzahl graphischer Schaltflächen, auf. In dem Steuerungsmodul sind Benutzerprofile speicherbar.

Spezielle der Bedienung programmgesteuerter Sanitär-Einrichtungen bzw. diesen zugeordneter elektronischer Steuereinheiten dienende Benutzerschnittstellen sind ebenfalls Gegenstand der Patentliteratur (vgl. beispielsweise US 2008/0259056 A1, US 2013/0170839 A1, US 2015/0218784 A1 und WO 2011/094455 A1). Auch die WO 2008/130349 A1 offenbart eine der Steuerung einer Sanitärinstallation dienende Benutzerschnittstelle. Diese weist eine Frontplatte auf, durch die hindurch ein Display sichtbar ist. Dieses umfasst Schaltflächen und einen Anzeigebereich, auf welchem dem Benutzer der Sanitärinstallation Informationen angezeigt werden. An der Frontplatte ist ein Sockel befestigt, auf dem ein insbesondere der Programmauswahl dienender Auswahlring drehbar gelagert ist.

Die DE 10 2017 105 187 A1 offenbart ein Sanitärsystem mit mindestens einer Sanitäreinrichtung und einer mit dieser datenleitend verbindbaren Kommunikationseinheit, welche eine Mehrzahl von Schnittstellen zur Kommunikation mit einer Mehrzahl von unterschiedlichen Bedieneinrichtungen aufweist. Die Kommunikationseinheit kann dabei auch dazu eingerichtet sein, zusätzlich den Betrieb mindestens einer Haustechnik-Elektronikkomponente vorzugeben oder nachzuhalten.

Die US 8,028,355 B2 offenbart ein für Badezimmer bestimmtes integriertes Elektronik-System mit einer Mehrzahl von Sensoren, welche Zustandsgrößen des Badezimmers erfassen und zugeordnete Signale an eine Steuereinheit kommunizieren. An das System können unterschiedliche Sanitäreinheiten angeschlossen wie Dusche, Badewanne, Waschbecken, etc. sein, denen Benutzerschnittstellen mit einem Speicher für benutzerdefiniert hinterlegte Vorgaben und der Programmauswahl und -anpassung dienende Bedienelemente zugeordnet sind.

Die US 2004/0204779 A1 offenbart eine der Bedienung einer Sanitäreinrichtung, insbesondre eines Whirlpools dienende Benutzer-Schnittstelle. Diese umfasst ein in mehrere Stellungen verstellbares Wahlelement, über das die einzustellende Betriebsgröße bzw. Funktion der Sanitäreinrichtung gewählt werden kann. Über die Betätigung von Bedienelementen kann der Benutzer der Sanitäreinrichtung zu der gewählten Betriebsgröße bzw. Funktion den Wert verändern oder die betreffende Funktion vollständig ein- oder ausschalten.

Dass gattungsgemäße Sanitärräume in der Praxis noch keine relevante Verbreitung gefunden haben, obwohl programmgesteuerte Sanitär-Einrichtungen bzw. solche Einrichtungen umfassende Sanitärstationen schon vor weit über zwanzig Jahren beschrieben wurden und schon ebenso lange ein anhaltend steigendes Komfortbedürfnis innerhalb der angesprochenen Bevölkerungs-Zielgruppe zu verzeichnen ist, lässt sich damit erklären, dass es bisher an wirklich praxistauglichen Angeboten fehlte bzw. noch immer fehlt. Hier Abhilfe zu schaffen ist die Hauptzielsetzung der vorliegenden Erfindung. Diese hat sich, mit anderen Worten, zur Aufgabe gemacht, einen Sanitärraum der gattungsgemäßen Art bereitzustellen, der höchste Ansprüche an den Komfort erfüllt und zugleich den sonstigen - insbesondere im Hinblick auf Handhabung und Benutzung bestehenden - praxisrelevanten Anforderungen genügt.

Gelöst wird diese Aufgabenstellung durch den Sanitärraum nach Anspruch 1. Die erfindungsgemäße Sanitärraum zeichnet sich somit, zusätzlich zu den eingangs dargelegten gattungsbildenden Merkmalen, durch die nachfolgende Kombination von mit diesen sowie untereinander synergetisch zusammenwirkenden Merkmalen aus:
- benachbart zu dem Personenzugang ist eine die Beleuchtungsprogramm-Auswahl und die Soundprogramm-Auswahl sowie die manuelle Modifikation des ausgewählten Beleuchtungsprogramms und des ausgewählten Soundprogramms ermöglichende Raum-Benutzerschnittstelle vorgesehen.

Eine der charakteristischen Besonderheiten des erfindungsgemäßen Sanitärraums besteht demgemäß darin, dass zwar die mindestens eine Sanitär-Einheit der Sanitärstation, die Beleuchtungseinrichtung des Sanitärraumes und die Soundeinrichtung des Sanitärraumes vermittels einer (gemeinsamen) elektronischen Steuerung gesteuert werden, dabei allerdings mindestens zwei räumlich voneinander getrennte und sich hinsichtlich ihrer Funktionalität unterscheidende Benutzerschnittstellen vorgesehen sind. Eine benachbart zu dem Personenzugang angeordnete Raum-Benutzerschnittstelle ermöglicht die Auswahl eines im Beleuchtungs-Programmspeicher hinterlegten Beleuchtungs- und eines im Sound-Programmspeicher hinterlegten Soundprogramms - wobei typischerweise jeweils ein Beleuchtungs- und ein Soundprogramm zu einem Szenerieprogramm miteinander verknüpft und so als bestimmte Szenerie gemeinsam aufrufbar sind - sowie die manuelle Modifikation des ausgewählten Beleuchtungsprogramms und des ausgewählten Soundprogramms (bzw. des kombinierten Szenerieprogramms), beispielsweise durch individuelle Modifikation der Helligkeit der Beleuchtungseinrichtung und der Lautstärke des von der Soundeinrichtung abgestrahlten Sounds; demgegenüber ermöglicht eine der Sanitär-Einrichtung zugeordnete Geräte-Benutzerschnittstelle der Sanitärstation die Auswahl eines Wasserabgabeprogramms sowie die manuelle Modifikation des ausgewählten Wasserabgabeprogramms, beispielsweise durch individuelle Modifikation der Temperatur und des Durchflusses. Die vorliegende Erfindung verfolgt auf diese Weise ein sich vom dargelegten Stand der Technik grundlegend unterscheidenden Ansatz mit dem Ergebnis einer signifikant gesteigerten Praxistauglichkeit.

Für den erfindungsgemäßen Sanitärraum und die mit ihm verbundenen Vorteile, namentlich das hohe, bisher nicht bekannte Ausmaß an Benutzerfreundlichkeit, ist somit eine charakteristische Kombination an miteinander interagierenden strukturellen und steuerungstechnischen Merkmalen bestimmend, wobei die steuerungstechnischen Merkmale im Folgenden auch dort, wo dies nicht explizit zum Ausdruck gebracht wird, die entsprechende Konfiguration der programmierbaren elektronischen Steuereinheit angeben. Für die exzellente Benutzerfreundlichkeit relevante Aspekte sind dabei die leichte Bedienbarkeit, welche intuitiv zu bewerkstelligen ist, bei hoher Flexibilität und - gemäß bevorzugten Ausgestaltungen - weiterhin hervorragender Interaktion mit dem Benutzer infolge des erfindungsgemäß realisierten Feedbacks an diesen. Im Hinblick auf diese und weitere vorteilhafte Wirkungen und Gesichtspunkte erfindungsgemäßer Sanitärräume wird auf die nachfolgende Beschreibung verwiesen, insbesondere auch auf die Darlegung bevorzugter Weiterbildungen und Ausgestaltungen sowie die Erläuterung des zeichnerisch veranschaulichten bevorzugten Ausführungsbeispiels.

Ein für die Benutzerfreundlichkeit und das Komfortempfinden des Benutzers sehr attraktiver Aspekt der Erfindung besteht darin, dass zwar einerseits innerhalb der elektronischen Steuerung eine funktionale Untergliederung - im Sinne der Vorgabe der den Sanitärraum im weiteren Sinne betreffenden Parameter (wie namentlich die Beleuchtungs- und Soundsituation) über die benachbart zum Zugang positionierte Raum-Benutzerschnittstelle und der Vorgabe der die Sanitär-Einrichtung betreffenden Parameter (wie namentlich die Wasserabgabe) über die Teil der Sanitärstation bildende Geräte-Benutzerschnittstelle - erfolgt, infolge der System-Vernetzung - im Falle der entsprechenden Ausgestaltung der elektronischen Steuerung - aber eine Beeinflussung der Beleuchtungs- und Soundsituation (sowie ggf. sonstiger Raum-Parameter) auch über die an der Geräte-Benutzerschnittstelle erfolgende Programmauswahl möglich ist. Gemäß einer insoweit besonders vorteilhaften Ausgestaltung der Erfindung ist nämlich vorgesehen, dass zumindest ein Teil der Wasserabgabeprogramme mit individuell auf die jeweils programmierte Wasserabgabe abstimmbaren Beleuchtungs- und/oder Soundprogrammelementen verknüpft ist. Steuerungstechnisch ist dabei besonders bevorzugt vorgesehen, dass im Falle einer Kollision von über die Raum-Benutzerschnittstelle aufgerufenen Beleuchtungs- und/oder Soundprogrammelementen mit solchen, welche - z. B. als Teil eines Wasserabgabeprogramms - über die Geräte-Benutzerschnittstelle aufgerufen werden, die zeitlich als letztes aufgerufenen Vorrang haben und ausgeführt werden; demnach liegt hier eine Priorisierung nicht über die zur Vorgabe genutzte Benutzerschnittstelle vor, sondern allein über die Reihenfolge der Vorgabe. Gemäß einer hierzu alternativen Ausgestaltung kann indessen auch steuerungstechnisch vorgesehen sein, dass die Geräte-Benutzerschnittstelle (bzw. die über diese erfolgenden Vorgaben) in dem Sinne Vorrang genießt/genießen vor der Raum-Benutzerschnittstelle (bzw. die über diese erfolgenden Vorgaben). In diesem Falle würden bei einer Kollision von über die Raum-Benutzerschnittstelle aufgerufenen Beleuchtungs- und/oder Soundprogrammelementen mit solchen, welche - z. B. als Teil eines Wasserabgabeprogramms - über die Geräte-Benutzerschnittstelle aufgerufen werden, letztere Priorität haben und ausgeführt werden. Einstellungen bzw. Programmvorgaben, die an der bzw. über die Geräte-Benutzerschnittstelle vorgenommen werden, würden demnach über an der bzw. über die Raum-Benutzerschnittstelle vorgenommene Einstellungen bzw. Programmvorgaben dominieren.

Gemäß einer anderen bevorzugten Weiterbildung der Erfindung umfasst der Sanitärraum mindestens eine Heizeinrichtung, wobei die elektronische Steuerung einen zur abrufbaren Hinterlegung mehrerer unterschiedlicher Heizprogramme geeigneten Heiz-Programmspeicher aufweist und die Raum-Benutzerschnittstelle zur Ermöglichung einer Heizprogramm-Auswahl konfiguriert ist. Die Begriffe "Heizeinrichtung" und "Heizprogramme" sind dabei - im Rahmen der gesamten vorliegenden Anmeldung - umfassend im Sinne einer Raumtemperierung zu verstehen, d. h. so breit, dass mittels der Heizeinrichtung auch eine Raumkühlung gemäß einem entsprechenden Kühlprogramm erfolgen kann. Bevorzugt ermöglicht die Raum-Benutzerschnittstelle dabei auch die manuelle Modifikation des ausgewählten Heizprogramms, beispielsweise über eine individuelle manuelle Modifikation der Temperaturvorgabe.

Die Raum-Benutzerschnittstelle weist bevorzugt ein Display auf, von dem mindestens ein Teilbereich seine Farbe in Abhängigkeit von einem mittels der Raum-Benutzerschnittstelle - über ein durch diese aufgerufenes Programm - vorgebbaren Raum-Parameter verändert. In diesem Sinne kann der besagte Teilbereich des Displays seine Farbe in Abhängigkeit von der Temperaturvorgabe des Heizprogramms bzw. dessen manueller Modifikation verändern; so wird dem Benutzer über das Display eine ergänzende Information bereitgestellt, und zwar in einer selbst bei (beispielsweise wegen abgenommener Brille bzw. entfernten Kontaktlinsen) herabgesetztem Sehvermögen intuitiv besonders gut wahrnehmbaren Form. Gemäß einer besonders bevorzugten Ausgestaltung richtet sich die Farbe des besagten Teilbereichs des Displays indessen nach der Farbe der Lichtstimmung des über die Raum-Benutzerschnittstelle aufgerufenen Beleuchtungsprogramms, d. h. hängt von dem jeweils aufgerufenen Beleuchtungsprogramm ab.

Im vorstehenden Zusammenhang kann es um die Beheizung des Sanitärraumes als Ganzes gehen, aber auch (ggf. zusätzlich) um lokal wirksame Heizeinrichtungen, beispielsweise für lokal wirksame Heizstrahler, dem Vorwärmen von Handtüchern dienende Heizeinrichtungen und dergleichen. Besonders bevorzugt, insbesondere im Hinblick auf einen weiter gesteigerten Komfort, sind dabei ein Beleuchtungsprogramm, ein Soundprogramm und ein Heizprogramm zu einem (komplexen) Szenerieprogramm miteinander verknüpft und so als bestimmte Szenerie gemeinsam aufrufbar. Die betreffende Szenerie kann dabei, wenn die programmierbare elektronische Steuerung auch noch auf weitere in dem Sanitärraum vorhandenen Einrichtungen einwirkt, auch noch entsprechende weitere Programmelemente umfassen. In diesem Sinne kann die elektronische Steuereinheit beispielsweise auf eine - an einem Fenster angeordnete - Verdunkelungs- oder Sichtschutzeinrichtung (z. B. ein Rollo) einwirken oder aber auf eine der Raumbeduftung dienende Einrichtung. In diesem Sinne umfasst der Sanitärraum bevorzugt mindestens ein Fenster mit einer Sichtschutz- bzw. Verdunkelungseinrichtung und/oder mindestens eine Beduftungseinrichtung, wobei die elektronische Steuerung einen zur abrufbaren Hinterlegung mindestens eines Sichtschutzprogramms geeigneten Sichtschutz-Programmspeicher und/oder einen zur abrufbaren Hinterlegung mindestens eines Beduftungsprogramms geeigneten Beduftungs-Programmspeicher aufweist und die Raum-Benutzerschnittstelle zur Aktivierung der Sichtschutz- bzw. Verdunkelungseinrichtung und/oder der Beduftungseinrichtung konfiguriert ist. Unter Aspekten des Komforts erfolgt auch die Ansteuerung dieser weiteren Einrichtungen besonders bevorzugt gemäß dem jeweils aufgerufenen Szenerieprogramm, so dass das Szenerieprogramm auch Sichtschutzprogrammelemente bzw. Beduftungsprogrammelemente umfasst. Einem Fachmann ist in diesem Zusammenhang klar, dass es sich bei den verschiedenen Programmspeichern nicht um diskrete, räumlich-strukturell voneinander getrennte Bauelemente handeln muss, sondern dass ein einheitlicher, gemeinsamer Programmspeicher für die abrufbare Abspeicherung sämtlicher Programme und Programmelemente vorgesehen sein kann.

Gemäß einer besonders bevorzugten Weiterbildung der Erfindung umfasst die elektronische Steuerung ein Benutzer-Identifikationsmodul und ist ein durch dieses generiertes Benutzer-Identifikationssignal der zentralen Datenverarbeitungseinheit für eine personenspezifische Vorselektion der an der Raum-Benutzerschnittstelle zur Auswahl angebotenen Beleuchtungsprogramme und Soundprogramme sowie der an der Benutzerschnittstelle zur Auswahl angebotenen Wasserabgabe-Programme zuführbar. So erfolgt hinsichtlich der an der Raum-Benutzerschnittstelle zur Auswahl angebotenen Beleuchtungsprogramme und Soundprogramme sowie hinsichtlich der an der Geräte-Benutzerschnittstelle zur Auswahl angebotenen Wasserabgabeprogramme eine von dem Ausgangssignal des Benutzer-Identifikationsmoduls abhängige Vorauswahl aus sämtlichen in dem Wasserabgabe-Programmspeicher hinterlegten Wasserabgabeprogrammen, in dem Beleuchtungs-Programmspeicher hinterlegten Beleuchtungsprogrammen und in dem Sound-Programmspeicher hinterlegten Soundprogrammen. Es erhält nicht jeder Benutzer das gleiche Angebot an Wasserabgabeprogrammen mit entsprechend voreingestellten Parametern; vielmehr werden verschiedenen die betreffende Sanitär-Einrichtung benutzenden Personen unterschiedliche, individuell zusammengestellte Beleuchtungs- und Soundprogrammangebote und Wasserabgabeprogrammangebote unterbreitet. Das erleichtert und beschleunigt die Programmauswahl und macht diese besonders komfortabel.

Der Benutzer-Identifikationssensor kann dabei beispielsweise auf biometrische Merkmale (z. B. Bewegungsmuster, Fingerabdruck, Gesichtsmuster, Stimmmuster, etc.) des jeweiligen Benutzers zurückgreifen oder auf technische Merkmale wie beispielsweise Erkennungscodes persönlicher Geräte oder Transponder an persönlicher Ausstattung. Angesichts des typischerweise gerade bei der Benutzung von Sanitär-Einrichtungen gesteigerten Intimitäts-Bedürfnisses ist dabei der Benutzer-Identifikationssensor, wenn dieser zur Erfassung von biometrischen Merkmalen der die Sanitär-Einrichtung benutzenden Person aus der Distanz ausgeführt ist, besonders bevorzugt zwischen einer Erfassungs-Konfiguration und einer physisch hiervon unterscheidbaren Blind-Konfiguration verstellbar. In diesem Sinne kann beispielsweise eine zur Erfassung von Bewegungsmustern oder Gesichtsmustern ausgeführte Kamera zwischen einer aus einem Gehäuse bzw. einer Einhausung ausgefahrenen Erfassungs-Konfiguration und einer in das Gehäuse bzw. in die Einhausung eingefahrenen Blind-Konfiguration verstellbar sein. So ist für den Benutzer ohne weiteres und unmittelbar ersichtlich, ob die Erfassung seiner biometrischen Merkmale aktiviert oder deaktiviert ist. Der Benutzer-Identifikationssensor kann dabei beispielsweise durch die zentrale Datenverarbeitungseinheit nach erfolgter Benutzer-Identifikation automatisch in seine Blind-Konfiguration verstellt werden; eine automatische Zurück-Verstellung in die Erfassungs-Konfiguration mittels der zentralen Datenverarbeitungseinheit kann dabei beispielsweise ausgelöst werden, wenn die betreffende Person den Sanitärraum verlässt, zu welchem Zweck auf die Datenverarbeitungseinheit ein (gesonderter) Personen-Anwesenheitssensor wirken kann. Oder der Benutzer-Identifikationssensor wird durch die zentrale Datenverarbeitungseinheit die Erfassungs-Konfiguration verstellt, wenn ein auf die Datenverarbeitungseinheit wirkender Personen-Anwesenheitssensor erkennt, dass eine Person den Sanitärraum betritt. Eine andere bevorzugte Möglichkeit besteht darin, dass der Benutzer-Identifikationssensor durch die zentrale Datenverarbeitungseinheit gemäß durch den betreffenden Benutzer selbst definierten Kriterien situationsabhängig aus seiner Erfassungs-Konfiguration in seine Blind-Konfiguration (und umgekehrt) verstellt wird.

Besonders bevorzugt ist in dem Beleuchtungs-Programmspeicher ein Standard-Beleuchtungsprogramm hinterlegt, welches zur Anwendung kommt, solange das Benutzer-Identifikationsmodul kein einem spezifischen registrierten Benutzer zuordenbares Ausgangssignal generiert, wobei eine individuelle Modifikation der Helligkeit der Beleuchtungseinrichtung über die Raum-Benutzerschnittstelle möglich ist.

Alternativ oder ergänzend zur vorstehend erläuterten benutzerspezifischen Vorselektion kann eine Vorselektion der an der Raum-Benutzerschnittstelle zur Auswahl angebotenen Beleuchtungs-, Sound- und/oder Szenerieprogramme und/oder der an der Geräte-Benutzerschnittstelle zur Auswahl angeboten Wasserabgabeprogramme auch wochentags- und/oder uhrzeitabhängig erfolgen. Durch den betreffenden Benutzer sind seinen persönlichen Szenerieprogrammen, in der programmierbaren Steuerung hinterlegt, spezifische Zeit-Präferenzen zugeordnet, so dass ihm an der Raum-Benutzerschnittstelle beispielsweise an einem Wochentag ein anderes Szenerie-Programmangebot unterbreitet wird als am Wochenende, und an dem gleichen Tag morgens ein anderes Programmangebot als abends. Zu diesem Zweck ist bevorzugt ein Zeitgeber vorgesehen, wobei ein durch diesen generiertes Zeitsignal der zentralen Datenverarbeitungseinheit zuführbar ist und eine zeitspezifische Programm-Vorselektion im obigen Sinne bewirkt.

In struktureller Hinsicht weist - gemäß einer wiederum anderen bevorzugten Weiterbildung der Erfindung - die Raum-Benutzerschnittstelle ein Display, einen sich um das Display herum erstreckenden, um eine zum Display senkrechte Achse verdrehbaren Einstellring mit einer von radial außen zugänglichen Umfangs-Grifffläche und vier um den Einstellring herum angeordnete Schaltflächen auf, wobei der Einstellring und/oder das Display zur Betätigung eines Bestätigungs-Tasters axial bewegbar ist und die vier Schaltflächen dergestalt als Programmwahl-Schaltfläche, als Beleuchtungs-Schaltfläche, als Sound-Schaltfläche und als Temperatur-Schaltfläche ausgeführt sind, dass durch ihre Betätigung ein - beim Drehen des Einstellrings - durch einen Einstellring-Drehaufnehmer bereitgestelltes Signal in der zentralen Datenverarbeitungseinheit im Sinne einer Szenerieprogrammselektion, einer Helligkeits-Modifikation innerhalb eines (als Teil des Szenerieprogramms) aufgerufenen Beleuchtungsprogramms, einer Lautstärke-Modifikation innerhalb eines (als Teil des Szenerieprogramms) aufgerufenen Soundprogramms und einer Temperatur-Modifikation innerhalb eines (als Teil des Szenerieprogramms) aufgerufenen Heizprogramms verarbeitet wird. Dies ermöglicht dem jeweiligen Benutzer eine besonders leicht und intuitiv handhabbare Bedienung; so lassen sich lästige Fehlbedienungen vermeiden.

Mit den vier Schaltflächen, von denen eine mit der Programmwahl, d. h. der Auswahl eines spezifischen Szenerieprogramms aus dem in dem Programmspeicher (ggf. speziell für den individuellen Benutzer, s. o.) hinterlegten Angebot, verknüpft ist und die drei weiteren mit der persönlich-momentanen Modifikation des aufgerufenen Szenerieprogramms durch individuelle Veränderung besonders charakteristischer ("primärer") Parameter der Szenerie (Helligkeit, Lautstärke, Temperatur), lassen sich auf praxisgerechte Weise auch solche Sanitärräume bedienen, welche zur Durchführung hochgradig komplexer Szenerieprogramme imstande sind. Denn es hat sich gezeigt, dass für weitere für die jeweilige Szenerie charakteristische ("sekundäre") Parameter ein eher nur untergeordneter Bedarf an einer Modifikation innerhalb des jeweils aufgerufenen Szenerieprogramms besteht, so dass - im Interesse einer benutzerfreundlichen Handhabung - insoweit auf die Möglichkeit eines solchen - manuell über die Raum-Benutzerschnittstelle erfolgenden - Eingriffs in das Programm verzichtet wird. Zur Beeinflussung/Variation solcher weiterer Parameter der Szenerie können statt der Möglichkeit der Modifikation durch manuelle Betätigung der Raum-Benutzerschnittstelle (d. h. der Schaltflächen und des Einstellrings) beispielsweise ein akustischer Eingang mit einem Sprachsteuerungsmodul (Sprachassistent) und/oder eine Möglichkeit der Modifikation per App auf einem mobilen Endgerät bereit stehen. Unbenommen bleiben im Übrigen die Möglichkeit der Hinterlegung eines gesonderten, in eben jenem "sekundären" Parameter abgewandelten Szenerieprogramms sowie die mögliche Beeinflussung bzw. Steuerung solcher "sekundärer" Raum-Parameter über das jeweils an der Geräte-Schnittstelle aufgerufene Wasserabgabeprogramm (s. o.). Solche Parameter des Szenerieprogramms, die ggf. nicht innerhalb des aufgerufenen Szenerieprogramms manuell über die Raum-Benutzerschnittstelle modifizierbar ist, sondern (nur) über die Auswahl eines anderen Szenerieprogramms oder auf sonstige Weise (z. B. per Sprachsteuerung) geändert werden können, können beispielsweise in der Raumbeduftung und der Aktivierung eines Sichtschutzes bestehen.

Besonders bevorzugt verfügt das Display der Raum-Benutzerschnittstelle dabei über einen Zentral-Anzeigebereich und einen diesen ringförmig umgebenden Peripher-Anzeigebereich, wobei der Peripher-Anzeigebereich vier den Schaltflächen räumlich zugeordnete Segmente mit jeweils einer Funktionswert-Statusanzeige der betreffenden Schaltflächenfunktion umfasst und durch Schaltflächen-Betätigung eine (entsprechend vergrößerte) Anzeige des Momentan-Einstellwerts der betreffenden Schaltflächenfunktion in dem Zentral-Anzeigebereich erfolgt. Auch hiervon profitiert die Benutzerfreundlichkeit. Namentlich kann dabei die Steuereinheit so konfiguriert sein, dass durch Schaltflächen-Betätigung die Funktionswert-Statusanzeige der betreffenden Schaltflächenfunktion im zugeordneten Peripher-Anzeigebereich erlischt. So wird der Effekt, welcher durch die Anzeige des Momentan-Einstellwerts der betreffenden Schaltflächenfunktion in dem Zentral-Anzeigebereich erreicht wird, sogar noch verstärkt.

Die vier Segmente des Peripher-Anzeigebereiches des Displays der Raum-Benutzerstelle können dabei, in dem weiter oben bereits angesprochenen Sinne, ihre Farbe in Abhängigkeit von der eingestellten, d. h. der über das aufgerufene Temperaturprogramm bzw. das aufgerufene Szenerieprogramm vorgegebenen oder manuelle modifizierten Temperatur verändern. Besonders gut warnehmbar durch den Benutzer ist dabei eine Farbvariation von blauen Tönen (bei niedriger eingestellter Temperatur) zu roten Tönen (bei hoher eingestellter Temperatur).

Wiederum unter Gesichtspunkten der Benutzerfreundlichkeit ist besonders vorteilhaft, wenn die Raum-Benutzerschnittstelle und die mindestens eine Geräte-Benutzerschnittstelle strukturell übereinstimmend ausgeführt sind. Insbesondere sollten dabei auch die jeweilige Programmauswahl, d. h. die Auswahl eines Szenerieprogramms an der Raum-Benutzerschnittstelle und die Auswahl eines Wasserabgabeprogramms an der Geräte-Benutzerschnittstelle über Betätigung übereinstimmend (z. B. oben-links) platzierter Schaltflächen erreichbar sein.

Im Interesse eines besonders hohen Nutzerkomforts verfügt die elektronische Steuerung besonders bevorzugt über einen die individuell vorgenommene Modifikation des aufgerufenen Szenerieprogramms speichernden Modifikationsspeicher. Der Speichermodus richtet sich dabei nach den individuellen Bedürfnissen, Anforderungen oder Gegebenheiten. So kann beispielsweise eine dauerhafte Speicherung der jeweiligen Modifikation erfolgen, ggf. als später erneut aufrufbares ergänzendes (modifiziertes) Szenerieprogramm zusätzlich zu dem die Basis bildenden unmodifizierten Szenerieprogramm. In Betracht kommt allerdings auch eine nur vorübergehende Speicherung, beispielsweise so lange, bis der betreffende Benutzer den Sanitärraum verlässt.

Die Vornahme der verschiedenen Programmierungen, insbesondere das Erstellen von über die Raum-Benutzerschnittstelle aufrufbaren persönlichen Szenerieprogrammen erfolgt bevorzugt durch den jeweiligen Benutzer vermittels eines mobilen Endgeräts, nämlich einer auf diesem installierten App. Vor diesem Hintergrund umfasst die Steuereinheit zweckmäßigerweise eine Datenkommunikationsschnittstelle (z. B. WiFi oder Bluetooth), insbesondere für die Eingabe von auf einem externen Gerät oder über dieses erstellten Programmdaten. Über die Datenkommunikationsschnittstelle kann im Übrigen, was sich seinerseits sehr positiv auf den Benutzerkomfort auswirkt, eine Vorbereitung des Sanitärraumes und/oder der Sanitär-Einrichtung für die spätere Benutzung bereits aus der Distanz und mit zeitlichem Vorlauf erfolgen, insbesondere durch entsprechend frühzeitige Inbetriebnahme der Heizeinrichtung bzw. entsprechend frühzeitiges Füllen der Badewanne.

Im Folgenden wird die vorliegende Erfindung anhand eines in der Zeichnung - teilweise schematisch - veranschaulichten bevorzugten Ausführungsbeispiels näher erläutert. Dabei zeigt
- Fig. 1: einen erfindungsgemäßen Sanitärraum,
- Fig. 2: die bei dem Sanitärraum nach Fig. 1 implementierte programmierbare elektronische Steuerung,
- Fig. 3: eine in dem Sanitärraum nach Fig. 1 einsetzbare Sanitär-Einrichtung in Form einer Dusche, samt der für diese relevanten Bereiche der programmierbaren elektronischen Steuerung,
- Fig. 4: die Geräte-Benutzerschnittstelle der in Fig. 3 gezeigten Dusche in perspektivischer Ansicht,
- Fig. 5: in Form der vier Teilfiguren 5A, 5B, 5C und 5D das Display der Geräte-Benutzerschnittstelle nach Fig. 4 in unterschiedlichen Bedienphasen,
- Fig. 6: in Form der vier Teilfiguren 6A, 6B, 6C und 6D das Display der Raum-Benutzerschnittstelle des Sanitärraums nach Fig. 1 in unterschiedlichen Bedienphasen,
- Fig. 7: eine Benutzeroberfläche der zur Programmierung der elektronischen Steuerung auf einem mobilen Endgerät installierten App und
- Fig. 8: die der Programmierung der Dusche dienende Benutzeroberfläche.

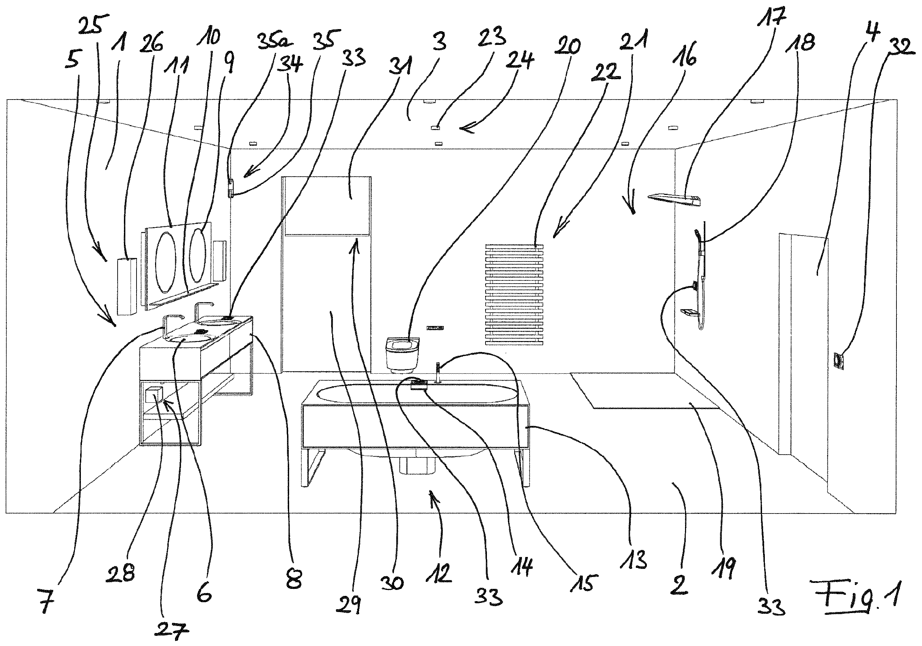

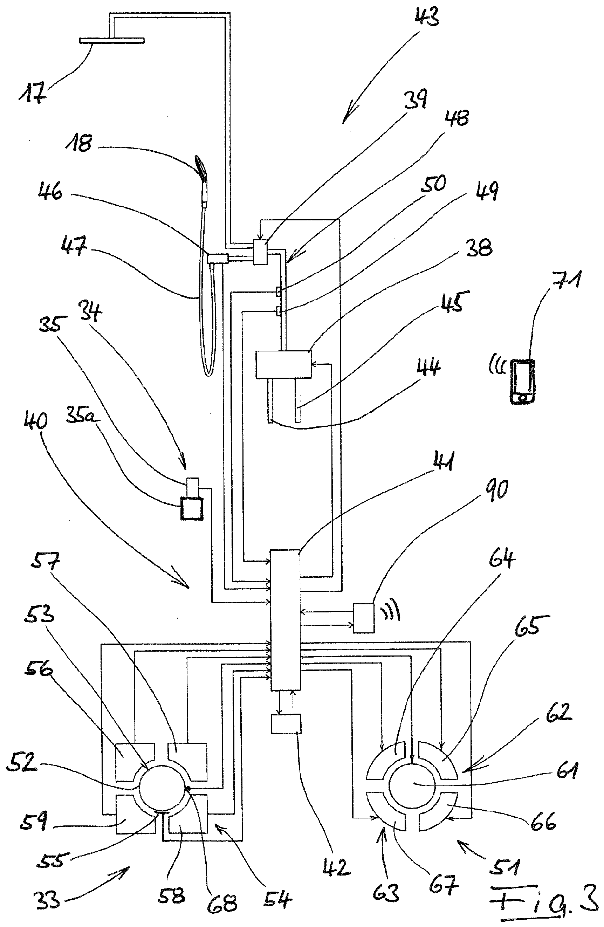

Der in Fig. 1 veranschaulichte, durch Wände 1, Boden 2 und Decke 3 begrenzte, über einen Personen-Zugang 4 erreichbare Sanitärraum ist mit diversen Sanitärstationen ausgestattet. Eine Waschstation 5 umfasst einen zwei Becken 6 und zugeordnete Wasser-Auslässe 7 aufweisenden Doppelwaschtisch 8 und einen Leuchtelemente 9 und eine Ablage 10 aufweisenden Wandspiegel 11. Eine Badestation 12 umfasst eine Badewanne 13 mit einem Haupt-Füllauslass 14 und einem Handbrause-Auslass 15. Eine Duschstation 16 umfasst, wie weiter unten unter Bezugnahme auf Fig. 3 im Detail ausgeführt, ebenfalls zwei Wasser-Auslässe, nämlich eine Kopfbrause 17 und eine Handbrause 18, und eine Duschtasse 19. Weiteres Inventar des Sanitärraumes sind eine Toilette 20, eine Heizeinrichtung 21 in Form eines Wandheizkörpers 22, eine als Anordnung von Deckenstrahlern 23 ausgeführte Beleuchtungseinrichtung 24, eine Soundeinrichtung 25 mit einer Mehrzahl von Lautsprechern 26 und eine Beduftungseinrichtung 27 in Form eines - zur Abgabe mehrerer unterschiedlicher Düfte/Aromen geeigneten - Duftspenders 28. Ferner ist ein in einer der Wände 1 vorgesehenes Fenster 29 mit einer Sichtschutzeinrichtung 30 ausgestattet, welche als motorisch angetriebenes Rollo 31 ausgeführt ist.

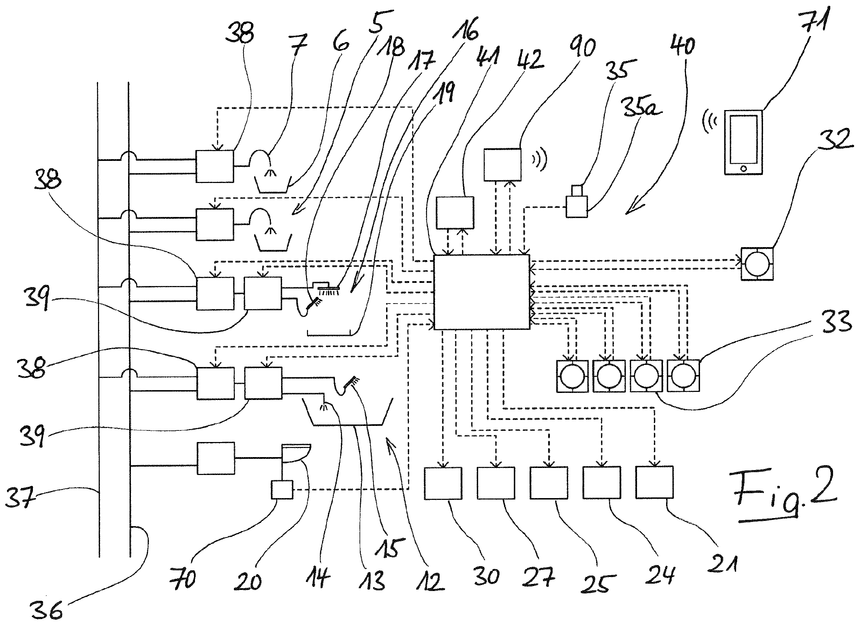

Der Sanitärraum ist mit einer programmierbaren elektronischen Steuerung (vgl. auch Fig. 2) ausgestattet, welche auf die genannten Sanitärstationen - insbesondere zur Steuerung der jeweiligen Wasserabgabe - sowie auch auf die weitere Ausstattung des Sanitärraums (namentlich die Heizeinrichtung 21, die Beleuchtungseinrichtung 24, die Soundeinrichtung 25, die Beduftungseinrichtung 27 und die Sichtschutzeinrichtung 30) steuernd einwirkt. Erkennbar sind in Fig. 1 die verschiedenen der programmierbaren elektronischen Steuerung zugehörigen Benutzerschnittstellen, nämlich die neben dem Personen-Zugang 4 angeordnete Raum-Benutzerschnittstelle 32 und die an den einzelnen Sanitärstationen vorgesehenen Geräte-Benutzerschnittstellen 33. Erkennbar ist schließlich ein an die zentrale Datenverarbeitungseinheit 41 angeschlossenes Benutzer-Identifikationsmodul 34. Dieses ist als Edge-Computing-Kamera 35 ausgeführt, welche das Bewegungsmuster von den Sanitärraum durch den Personen-Zugang 4 betretenden Personen erfasst und - soweit das Bewegungsmuster mit einem der lokal abgespeicherten Bewegungsmuster übereinstimmt - die betreffende Person identifiziert. Durch Identifizierung des Benutzers in der Peripherie, d. h. in der Edge-Computing-Kamera 35, erübrigt sich eine Übermittlung der erfassten Bewegungsdaten an die zentrale Datenverarbeitungseinheit 41. Das in der Edge-Computing-Kamera 35 generierte, der zentralen Datenverarbeitungseinheit 41 zugeführte Benutzer-Identifikationssignal wird in der zentralen Datenverarbeitungseinheit 41 für eine personenspezifische Vorselektion der an der Raum-Benutzerschnittstelle 32 zur Auswahl angebotenen Szenerie-Programme und der an der Geräte-Benutzerschnittstelle 33 zur Auswahl angebotenen Wasserabgabe-Programme verwertet. Die Edge-Computing-Kamera 35 ist dabei zwischen einer Erfassungs-Konfiguration und einer physisch hiervon unterscheidbaren Blind-Konfiguration verstellbar, indem sie in letzterer vollständig in ein Gehäuse 35a versenkt ist.

Gemäß der schematischen Veranschaulichung nach Fig. 2 ist jedem der beiden Auslässe 7 des Doppelwaschtisches 8 eine an einen Kaltwasserstrang 36 und einen Warmwasserstrang 37 angeschlossene Dosier- und Mischventileinheit 38 zugeordnet. Entsprechendes gilt für die Badestation 12 und die Duschstation 16, wobei hier - angesichts der Möglichkeit der Auswahl jeweils zwischen zwei unterschiedlichen Wasser-Auslässen - zusätzlich jeweils ein Verteilventil 39 nachgeschaltet ist. Sowohl die Dosier- und Mischventileinheiten 38 als auch die Verteilventile 39 werden durch die programmierbare elektronische Steuerung 40 gesteuert; hierzu wirkt die (zentrale) Datenverarbeitungseinheit 41 der elektronischen Steuerung 40 auf den besagten Ventilen bzw. Ventileinheiten zugeordnete (nicht gezeigte) Aktuatoren. Weiterhin umfasst die elektronische Steuerung 40 einen Programmspeicher 42, in dem die verschiedenen aufrufbaren Programme und Programmelemente (s. u.) für die Datenverarbeitungseinheit 41 abrufbar hinterlegt sind. Mit der Datenverarbeitungseinheit 41 kommunizieren die Raum-Benutzerschnittstelle 32 sowie die vier Geräte-Benutzerschnittstellen 33, wobei es sich bei diesen, wie nachstehend in Detail erläutert wird, um kombinierte Ein- und Ausgabeterminals handelt. Nur aus Gründen der Darstellung sind (in der schematischen Fig. 2) die vier Geräte-Benutzerschnittstellen 33 nebeneinander und räumlich getrennt von den jeweils durch sie angesteuerten Sanitär-Einrichtungen veranschaulicht; in der praktischen Ausführung (vgl. Fig. 1) sind die Geräte-Benutzerschnittstellen 33 nämlich Teil der jeweiligen Sanitärstation und somit über den Sanitärraum verteilt unmittelbar benachbart zu der jeweils angesteuerten Sanitär-Einrichtung angeordnet.

Bei der - an die Datenverarbeitungseinheit 41 angeschlossenen - Kamera 35 handelt es sich um eine Eingabeeinheit in dem Sinne, als das durch sie bereitgestellte Identifikationssignal im Rahmen der Programm-Vorauswahl verarbeitet wird. Zusätzlich zu den Ventilen/Ventileinheiten der Sanitärstationen werden von der Datenverarbeitungseinheit 41 auch die Heizeinrichtung 21, die Beleuchtungseinrichtung 24, die Soundeinrichtung 25, die Beduftungseinrichtung 27 und die Sichtschutzeinrichtung 30 gemäß jeweils durchgeführten Programmen bzw. Programmelementen angesteuert.

Als Beispiel für die Sanitärstationen des Sanitärraumes wird im Folgenden unter Bezugnahme auf die Figuren 3 bis 5 die Duschstation 16 und die dieser zugeordnete Bereich der Steuerung näher erläutert. Die in Fig. 3 gezeigte Dusche 43 verfügt - in bekannter Weise - über einen Kaltwasser-Zulauf 44, einen Warmwasser-Zulauf 45, eine Dosier- und Mischventileinheit 38, ein Verteilventil 39 und zwei Wasser-Auslässe in Form einer Kopfbrause 17 und einer Handbrause 18 (samt Wandanschluss/Halterung 46 und Schlauch 47). Die entsprechenden Komponenten sind in als solches bekannter und üblicher Weise über wasserführende Leitungen 48 miteinander verbunden.

Zur Steuerung der Wasserabgabe über die Kopfbrause 17 oder die Handbrause 18 mit einem bestimmten Durchfluss und einer bestimmten Temperatur werden die Dosier- und Mischventileinheit 38 und das Verteilventil 39 durch die programmierbare elektronische Steuerung 40 betätigt. Hierzu wirkt die zentrale Datenverarbeitungseinheit 41 der elektronischen Steuerung 40 auf der Dosier- und Mischventileinheit 38 sowie dem Verteilventil 39 zugeordnete (nicht dargestellte) Aktuatoren ein.

Die tatsächliche Wasser-Temperatur und der tatsächliche Wasser-Durchfluss stromabwärts der Dosier- und Mischventileinheit 39 werden über einen Temperatursensor 49 bzw. einen Durchflusssensor 50 erfasst, und die betreffenden Messwerte werden für eine Temperatur- und Durchflussregelung auf die zentrale Datenverarbeitungseinheit 41 zurückgeführt.

Die elektronische Steuerung 40 ist in dem Sinne programmierbar, dass die über die beiden Wasser-Auslässe erfolgende Wasserabgabe programmgesteuert abläuft. Hierzu umfasst die elektronische Steuerung 40 einen zur abrufbaren Hinterlegung mehrerer unterschiedlicher Wasserabgabeprogramme geeigneten, mit der zentralen Datenverarbeitungseinheit 41 kommunizierenden Programmspeicher 42. Weiterhin kommuniziert mit der zentralen Datenverarbeitungseinheit 41 die der Dusche 43 zugeordnete Geräte-Benutzerschnittstelle 33, welche die Auswahl des durchzuführenden Wasserabgabeprogramms sowie dessen manuelle Modifikation ermöglicht.

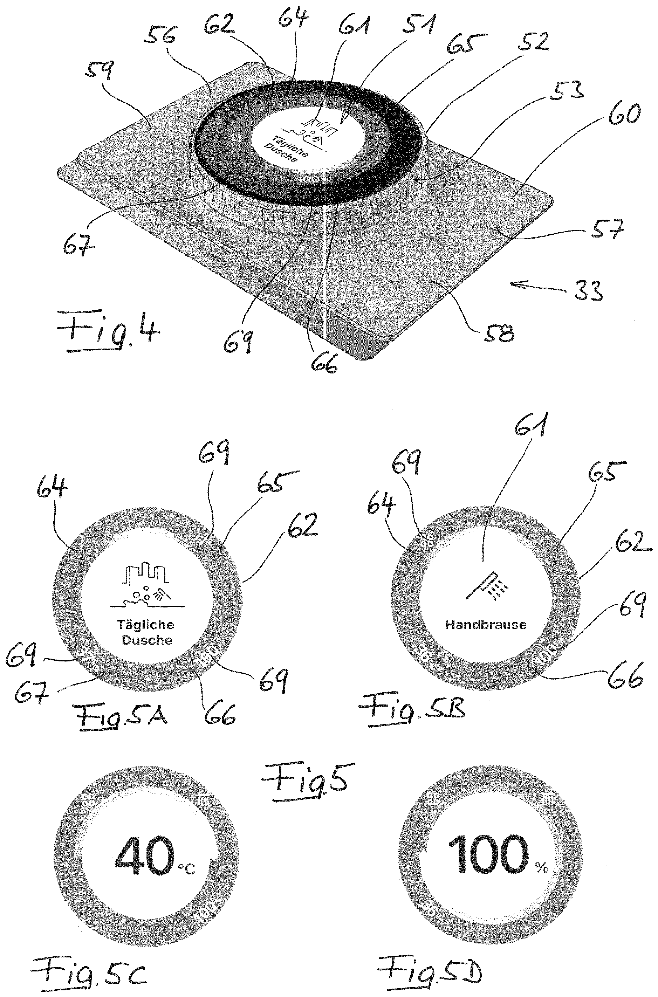

Während die Geräte-Benutzerschnittstelle 33 in Fig. 4 in ihrer räumlich-körperlichen Ausführung dargestellt ist, sind ihre einzelnen Elemente, Teile, Komponenten und Bereiche in Fig.3 - aus Gründen der Darstellung - voneinander isoliert. Die Geräte-Benutzerschnittstelle 33 weist ein rundes Display 51, einen sich um das Display 51 herum erstreckenden, um eine zum Display 51 senkrechte Achse verdrehbaren Einstellring 52 mit einer von radial außen zugänglichen Umfangs-Grifffläche 53 und vier um den Einstellring 52 herum angeordnete, gegenüber diesem sowie dem Display 51 zurückversetzte Schaltflächen 54 auf. Der Einstellring 52 wirkt mit einem ihm zugeordneten Einstellring-Drehaufnehmer 55 zusammen. Gemäß den ihnen zugewiesenen Funktionen (s. u.) handelt es sich bei den vier Schaltflächen 54 um eine Programmwahl-Schaltfläche 56, eine Auslassauswahl-Schaltfläche 57, eine Ausgabe-Schaltfläche 58 und eine Temperatur-Schaltfläche 59. Alle vier Schaltflächen 54 weisen ein ihre Funktion symbolisierendes hinterleuchtetes Funktionssymbol 60 auf.

Das Display 51 verfügt über einen Zentral-Anzeigebereich 61 und einen diesen kreisringförmig umgebenden Peripher-Anzeigebereich 62. Letzterer umfasst vier den Schaltflächen 54 räumlich zugeordnete Segmente 63 in Form eines Programmanzeige-Segments 64, eines Auslassanzeige-Segments 65, eines Ausgabeanzeige-Segments 66 und eines Temperaturanzeige-Segments 67.

Die elektronische Steuerung 40 ist so konfiguriert, dass ein nach einer Betätigung der Programmwahl-Schaltfläche 56 beim Drehen des Einstellrings 52 durch den Einstellring-Drehaufnehmer 55 bereitgestelltes Signal in der zentralen Datenverarbeitungseinheit 41 im Sinne einer Wasserabgabeprogrammselektion verarbeitet wird. Durch fortgesetztes Drehen des Einstellrings 52 werden in dem Zentral-Anzeigebereich 61 des Displays 51 nacheinander Symbole angezeigt, welche den einzelnen in dem Programmspeicher 42 hinterlegten Wasserabgabeprogrammen zugewiesen sind und diese symbolisieren. Durch Drücken des - axial bewegbar gelagerten - Displays 51 erfolgt eine Betätigung eines Bestätigungs-Tasters 68 und auf diese Weise eine Bestätigung bzw. ein Aufruf des in dem Zentral-Anzeigebereich 61 des Displays 51 über das zugeordnete Symbol angezeigten Wasserabgabeprogramms. Dieses wird durch die zentrale Datenverarbeitungseinheit 41 aus dem Programmspeicher 42 abgerufen.

Innerhalb des jeweils aufgerufenen Wasserabgabeprogramms kann der Benutzer über die Geräte-Benutzerschnittstelle 33 manuell individuelle Modifikationen charakteristischer Wasserabgabeparameter vornehmen, so dass die Wasserabgabe - unter entsprechender Abweichung vom aufgerufenen Programm - individuell an die persönlichen Bedürfnisse angepasst werden kann. Hierzu ist die elektronische Steuerung 40 so konfiguriert, dass in der zentralen Datenverarbeitungseinheit 41 ein nach einer Betätigung der Temperatur-Schaltfläche 59 - beim Drehen des Einstellrings 52 - durch den Einstellring-Drehaufnehmer 55 bereitgestelltes Signal im Sinne einer Temperatur-Modifikation, ein nach einer Betätigung der Ausgabe-Schaltfläche 58 durch den Einstellring-Drehaufnehmer 55 bereitgestelltes Signal im Sinne einer Durchfluss-Modifikation und ein nach einer Betätigung der Auslassauswahl-Schaltfläche 57 durch den Einstellring-Drehaufnehmer 55 bereitgestelltes Signal im Sinne einer Umschaltung des Wasser-Auslasses verarbeitet wird.

Unabhängig von einer Bedienung an der Geräte-Benutzerschnittstelle 33 erfolgt eine automatische Umschaltung der Wasserabgabe auf die Handbrause 18, wenn diese der Halterung 46 entnommen wird. Hierzu verfügt die Halterung 46 über einen eingebetteten Sensor (Nutzungssensor), der bei der Entnahme der Handbrause 18 ein der zentralen Datenverarbeitungseinheit 41 zugeführtes Nutzungssignal generiert.

Jedes der vier Segmente 63 des Peripher-Anzeigebereichs 62 weist eine Funktionswert-Statusanzeige 69 der betreffenden Schaltflächenfunktion auf. So sind die momentanen, aktuellen - sich ggf. durch Modifikation des aufgerufenen Programms (s. o.) ergebenden - Funktions-/Einstellwerte für Wassertemperatur, Wasserdurchfluss und Wasser-Auslass mittels der in das Temperaturanzeige-Segment 67, in das Ausgabeanzeige-Segment 66 und das Auslassanzeige-Segment 65 des Peripher-Anzeigebereichs 62 des Displays 51 eingebetteten Funktionswert-Statusanzeigen 69 angezeigt. Allerdings erlischt mit der Betätigung einer der Schaltflächen 54 die Funktionswert-Statusanzeige 69 in dem dieser Schaltfläche zugeordneten Segment 63 des Peripher-Anzeigebereichs 62; und der momentane Funktions-/Einstellwert, der nach Betätigung der betreffenden Schaltfläche 52 mittels des Einstellrings 52 verstellbar ist, wird entsprechend groß in dem Zentral-Anzeigebereich 61 des Displays 51 angezeigt, so dass die Veränderung für den Benutzer besonders leicht erkennbar ist. Veranschaulicht ist dies in den Teilfiguren 5A bis 5D der Fig. 5, wobei sich die Geräte-Benutzerschnittstelle 33 - durch entsprechende vorausgegangene Schaltflächenbetätigung - gemäß Fig. 5A im Programmwahl-Modus befindet, gemäß Fig. 5B im Wasserauslass-Modifikationsmodus, gemäß Fig. 5C im Temperatur-Modifikationsmodus und gemäß Fig. 5D im Wasserdurchfluss-Modifikationsmodus.

Die elektronische Steuerung 40 ist weiterhin so konfiguriert, dass die Segmente 63 des Peripher-Anzeigebereiches 62 gemeinsam ihre Farbe in Abhängigkeit von der eingestellten Wasserabgabetemperatur verändern; so wechselt der ringförmige Peripher-Anzeigebereich 62 als Ganzes seine Farbe - graduell abgestuft - von blau (bei niedrigen Wassertemperaturen) nach rot (bei hohen Wassertemperaturen). Weiterhin wird eine vorgegebene Zeit (z. B. zwei Sekunden) nach der letzten Betätigung der Geräte-Benutzerschnittstelle 33 automatisch der Temperatur-Modifikationsmodus aktiviert, in dem ein Drehen des Einstellrings 52 eine Veränderung der eingestellten Temperatur bewirkt.

Für die Waschstation 5 und die Badestation 12 sind die Geräte-Benutzerschnittstellen 33 baulich-strukturell identisch ausgeführt. Die drei Modifikations-Schaltflächen und die diesen zugeordneten Bereiche des Displays sind allerdings funktional anders belegt. Bei der Waschstation 5 sind innerhalb des jeweils aufgerufenen Wasserabgabeprogramm die durch dieses vorgegebenen Werte für Waschbeckenhöhe bzw. Füllhöhe, Wasserdurchfluss und Wassertemperatur modifizierbar, und bei der Badestation 12 die durch das jeweils aufgerufene Wasserabgabeprogramm vorgegebenen Werte für Füllmenge, Wasserdurchfluss und Wassertemperatur.

Die Toilette 20 ist als intelligente Toilette ausgeführt. Sie verfügt über eine - an die zentrale Datenverarbeitungseinheit 41 angeschlossene - Einrichtung 70 zur Urin-Analyse. Wichtige charakteristische Parameter des Urins werden ad-hoc analysiert und mit in dem Programmspeicher 42 - spezifisch für die jeweilige Person - hinterlegten Sollwerten (samt Toleranzband) verglichen. Ergibt sich eine signifikante Abweichung, so erfolgt - über einen entsprechenden Hinweis auf dem mit der elektronischen Steuerung 40 kommunizierenden Smartphone 71 - eine Benachrichtigung des Benutzers (oder ggf. einer Betreuungsperson) samt einer Nahrungsergänzungsempfehlung.

Über die Raum-Benutzerschnittstelle 32 lässt sich - als sog. "Szenerie", für welche insbesondere die Parameter Temperatur, Beleuchtung und Sound maßgeblich sind - die während der Benutzung des Sanitärraums in diesem bestehende Raumsituation bzw. -atmosphäre aufrufen. Hierzu sind in dem Programmspeicher 42 Szenerieprogramme hinterlegt, welche in dem vorliegenden Fall ergänzend zu jeweiligen Einstellungen für die Heizeinrichtung 21, die Beleuchtungseinrichtung 24 und die Soundeinrichtung 25 auch noch die Einstellung der Sichtschutzeinrichtung 30 und der Beduftungseinrichtung 27 betreffende Programmelemente umfassen.

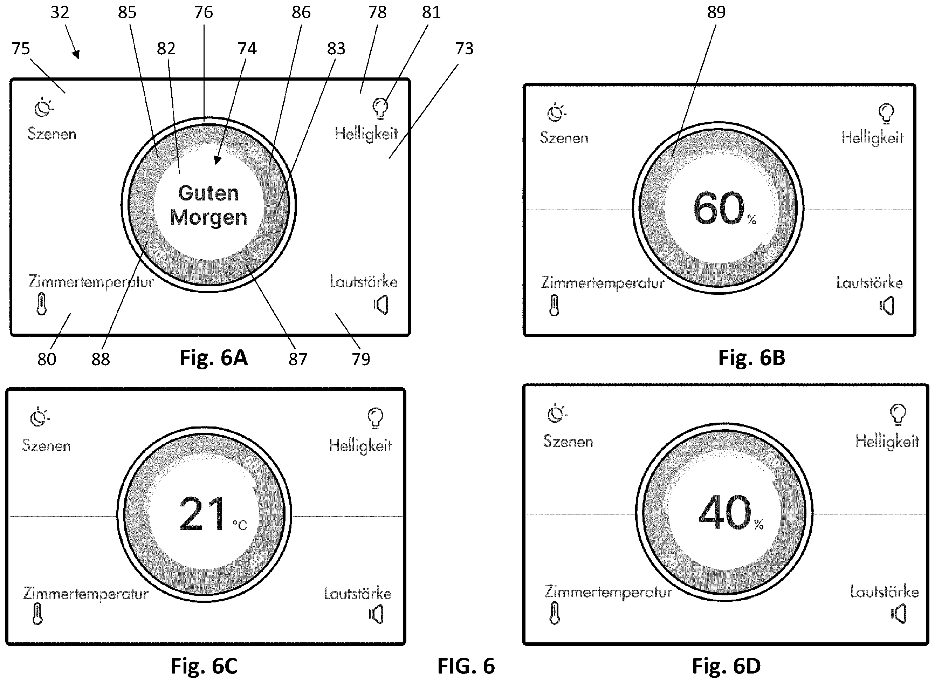

Die Raum-Benutzerschnittstelle 32 ist baulich-strukturell identisch aufgebaut zu der vorstehend eingehend erläuterten Geräte-Benutzerschnittstelle 33. Insoweit wird auf die betreffenden Erklärungen verwiesen. Abweichend ist allerdings die funktionale Belegung der Schaltflächen 73 und der verschiedenen Bereiche und Segmente des Displays 74. Und zwar verfügt (vgl. Fig. 6) die Raum-Benutzerschnittstelle 32 über eine - der Auswahl eines der angebotenen Szenerieprogramme dienende - Programmwahl-Schaltfläche 75 sowie drei weitere Schaltflächen, welche - im Zusammenwirken mit dem Einstellring 76 und dem Bestätigungstaster - der individuellen Modifikation der durch das jeweils ausgewählte Szenerieprogramm vorgegebenen Beleuchtungssituation, Soundsituation und Temperatursituation dienen. Diese drei weiteren Schaltflächen sind die Helligkeits-Schaltfläche 78, die Lautstärke-Schaltfläche 79 und die Temperatur-Schaltfläche 80. Alle vier Schaltflächen 73 weisen wiederum ein ihre Funktion symbolisierendes hinterleuchtetes Funktionssymbol 81 auf.

Auch das Display 74 der Raum-Benutzerschnittstelle 32 verfügt über einen Zentral-Anzeigebereich 82 und einen diesen kreisringförmig umgebenden Peripher-Anzeigebereich 83. Letzterer umfasst vier den Schaltflächen 73 räumlich zugeordnete Segmente 84 in Form eines Programmanzeige-Segments 85, eines Helligkeitsanzeige-Segments 86, eines Lautstärkeanzeige-Segments 87 und eines Temperaturanzeige-Segments 88. Jedes der vier Segmente des Peripher-Anzeigebereichs weist eine Funktionswert-Statusanzeige 89 der betreffenden Schaltflächenfunktion auf. So sind die momentanen, aktuellen - sich ggf. durch Modifikation des aufgerufenen Szenerieprogramms (s. o.) ergebenden - Funktions-/Einstellwerte für Helligkeit, Lautstäke und Raumtemperatur mittels der in das Helligkeitsanzeige-Segment 86, in das Lautstärkeanzeige-Segment 87 und das Temperaturanzeige-Segment 88 des Peripher-Anzeigebereichs 83 des Displays 74 eingebetteten Funktionswert-Statusanzeigen 89 angezeigt. Allerdings erlischt mit der Betätigung einer der Schaltflächen 73 die Funktionswert-Statusanzeige 89 in dem dieser Schaltfläche zugeordneten Segment 84 des Peripher-Anzeigebereichs 83; und der momentane Funktions-/Einstellwert, der nach Betätigung der betreffenden Schaltfläche 73 mittels des Einstellrings 76 verstellbar ist, wird entsprechend groß in dem Zentral-Anzeigebereich 82 des Displays 74 angezeigt, so dass die Veränderung für den Benutzer besonders leicht erkennbar ist. Veranschaulicht ist dies in den Teilfiguren 6A bis 6D der Fig. 6, wobei sich die Raum-Benutzerschnittstelle 32 - durch entsprechende vorausgegangene Schaltflächenbetätigung - gemäß Fig. 6A im Programmwahl-Modus befindet, gemäß Fig. 6B im Helligkeits-Modifikationsmodus, gemäß Fig. 6C im Temperatur-Modifikationsmodus und gemäß Fig. 6D im Lautstärke-Modifikationsmodus.

Wichtig ist, dass die Raumsituation betreffende Parameter (vorliegend Beleuchtung, Sound, Temperatur, Beduftung und Sichtschutz) sich nicht nur über - mittels der Raum-Benutzerschnittstelle 32 - aufzurufende Szenerieprogramme vorgeben lassen, sondern dass auch - mittels der jeweiligen Geräte-Benutzerschnittstelle 33 aufzurufende - Wasserabgabeprogramme entsprechende Programmelemente enthalten können. Im Falle einer Kollision, d. h. beispielsweise unterschiedlicher Vorgaben für die Einstellung der Beleuchtungseinrichtung oder die Soundeinrichtung, haben gemäß einer entsprechenden Konfigurierung der elektronischen Steuerung 40 die Vorgaben der Geräte-Benutzerschnittstelle 33 Vorrang.

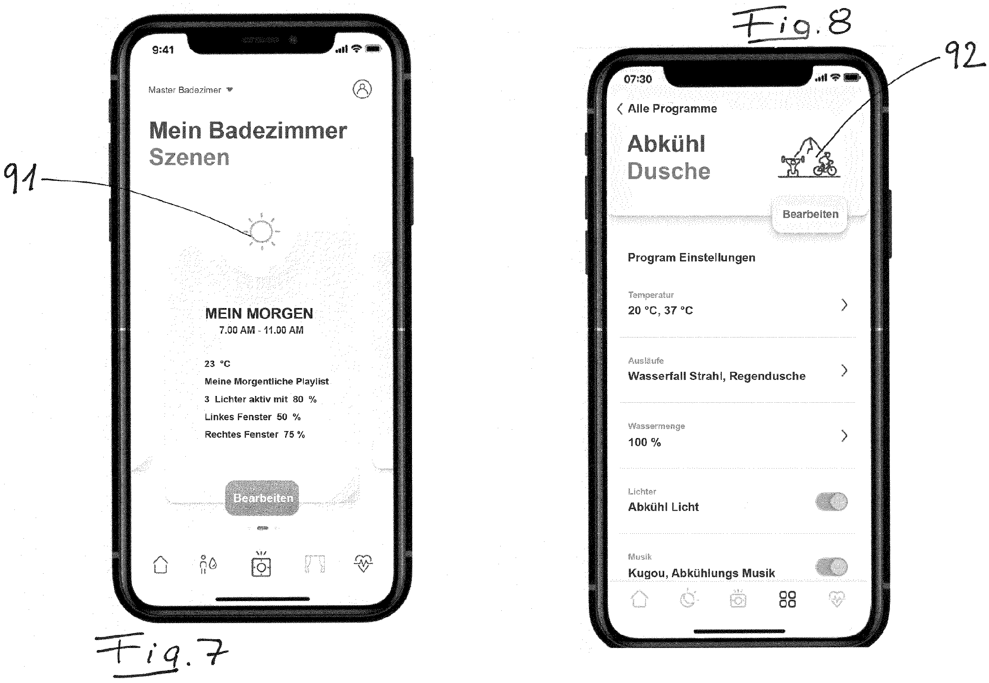

Für ihre Programmierung mittels eines externen mobilen Endgeräts, namentlich eines Smartphones 71, auf welchem eine hierzu ausgelegte und geeignete App installiert ist, verfügt die elektronische Steuerung 40 über eine Datenkommunikationsschnittstelle 90. Die Figuren 7 und 8 zeigen beispielhaft eine mögliche Smartphone-Benutzeroberfläche der entsprechenden App, und zwar einerseits (Fig. 7) auf der Ebene der Programmierung eines - hier als "My Morning" bezeichneten und mit einem spezifischen Symbolbild 91, welches dem an der Raum-Benutzerschnittstelle 32 angezeigten Programmsymbol entspricht, illustrierten - Szenerieprogramms und andererseits (Fig. 8) auf der Ebene der Programmierung eines bestimmten - hier als "Cool Down Shower" bezeichneten und mit einem spezifischen Symbolbild 92, welches dem an der Geräte-Benutzerschnittstelle 33 angezeigten Programmsymbol entspricht, illustrierten - Wasserabgabeprogramms.

Erkennbar sind in Fig. 7 die benutzerseitig für das Szenerieprogramm "My Morning" gewählten Vorgaben, nämlich Anwendungszeit-Präferenz von 7:00 Uhr bis 11:00 Uhr vormittags, Raumtemperatur 23°C, abzuspielendes Soundprogramm "My morning Playlist", Beleuchtung über drei auf 80% gedimmte Leuchten, Sichtschutz zu 50% (am linken Fenster) bzw. 75% (am rechten Fenster). Durch Drücken der "Edit"-Schaltfläche gelangt der Benutzer in den Einstell- bzw. Änderungsmodus.

In Fig. 8 sind die benutzerseitig für das Wasserabgabeprogramm "Cool Down Shower" gewählten Vorgaben erkennbar, nämlich - jeweils mit 100% Wasserdurchfluss - die Wasser-Auslass/Temperatur Abfolge "Waterfall Spray" mit 20°C und "Rain Spray" mit 37°C, bei Beleuchtung gemäß dem Beleuchtungsprogramm "Cool Down Light" und Abspielen der Soundprogramm-Abfolge "Kugou" und "Cool Down Songs". Wiederum gelangt der Benutzer durch Drücken der "Edit"-Schaltfläche in den Einstell- bzw. Änderungsmodus. Bei entsprechender Hardwareausstattung der Dusche 43 könnte dem Wasserabgabeprogramm "Cool Down Shower" unter Nutzung der Programmier-App beispielsweise auch die Zugabe eines Körperpflegemittels zu dem abgegebenen Wasser zugewiesen werden; und über die Einstellungen der Beleuchtungs- und Soundeinrichtungen hinausgehend wäre im Rahmen des Wasserabgabeprogramms auch die (gegenüber Vorgaben des jeweils aufgerufenen Szenerieprogramms höherrangige) Vorgabe von weiteren Raum-Parametern wie beispielsweise eine Einstellung der Heizeinrichtung 21 oder der Sichtschutzeinrichtung 30 möglich.

## Patentansprüche

1. Sanitärraum eines Gebäudes, mit einem Personen-Zugang (4), mindestens einer Sanitärstation (5, 12, 16), einer Beleuchtungseinrichtung (24) und einer Soundeinrichtung (25), wobei
- die Sanitärstation (5, 12, 16) eine Sanitär-Einrichtung mit einem Kaltwasser-Zulauf (44), einem Warmwasser-Zulauf (45), mindestens einem Wasser-Auslass und einer Dosier- und Mischventileinheit (38), welche zur Beeinflussung des Gesamtdurchflusses durch den Wasser-Auslass und des Verhältnisses der Kaltwasser-Teilmenge und der Warmwasser-Teilmenge zueinander an dem Gesamtdurchfluss geeignet ist, aufweist,
- auf die Dosier- und Mischventileinheit (38), die Beleuchtungseinrichtung (24) und die Soundeinrichtung (25) eine programmierbare elektronische Steuerung (40) einwirkt,
- die programmierbare elektronische Steuerung (40) einen zur abrufbaren Hinterlegung mehrerer unterschiedlicher Wasserabgabeprogramme geeigneten Wasser-Programmspeicher (42), einen zur abrufbaren Hinterlegung mehrerer unterschiedlicher Beleuchtungsprogramme geeigneten Beleuchtungs-Programmspeicher (42), einen zur abrufbaren Hinterlegung mehrerer unterschiedlicher Soundprogramme geeigneten Sound-Programmspeicher (42) und mindestens eine Datenverarbeitungseinheit (41) auf weist, welche mindestens einen Aktor der Dosier- und Mischventileinheit (38), mindestens einen Leuchtmittelregler und mindestens einen Soundgenerator betätigt, und
- die Sanitärstation (5, 12, 16) eine der Sanitär-Einrichtung zugeordnete, die Wasserabgabeprogramm-Auswahl sowie die manuelle Modifikation des ausgewählten Wasserabgabeprogramms ermöglichende Geräte-Benutzerschnittstelle (33) umfasst;
**dadurch gekennzeichnet, dass**
- räumlich getrennt von der Geräte-Benutzerschnittstelle (33), benachbart zu dem Personenzugang (4) eine die Beleuchtungsprogramm-Auswahl und die Soundprogramm-Auswahl sowie die manuelle Modifikation des ausgewählten Beleuchtungsprogramms und des ausgewählten Soundprogramms ermöglichende Raum-Benutzerschnittstelle (32) vorgesehen ist.

2. Sanitärraum nach Anspruch 1, **dadurch gekennzeichnet, dass** die elektronische Steuerung (40) ein Benutzer-Identifikationsmodul (34) umfasst, wobei hinsichtlich der an der Raum-Benutzerschnittstelle (32) zur Auswahl angebotenen Beleuchtungsprogramme und Soundprogramme sowie hinsichtlich der an der Geräte-Benutzerschnittstelle (33) zur Auswahl angebotenen Wasserabgabeprogramme eine von dem Ausgangssignal des Benutzer-Identifikationsmoduls (34) abhängige Vorauswahl aus sämtlichen in dem Wasser-Programmspeicher (42) hinterlegten Wasserabgabeprogrammen, in dem Beleuchtungs-Programmspeicher (42) hinterlegten Beleuchtungsprogrammen und in dem Sound-Programmspeicher (42) hinterlegten Soundprogrammen erfolgt, wobei bevorzugt in dem Beleuchtungs-Programmspeicher (42) ein Standard-Beleuchtungsprogramm hinterlegt ist, welches zur Anwendung kommt, solange das Benutzer-Identifikationsmodul (34) kein einem spezifischen registrierten Benutzer zuordenbares Ausgangssignal generiert.

3. Sanitärraum nach Anspruch 2, **dadurch gekennzeichnet, dass** das Benutzer-Identifikationsmodul (34) einen Benutzer-Identifikationssensor (35) umfasst, welcher zwischen einer Erfassungs-Konfiguration und einer physisch hiervon unterscheidbaren Blind-Konfiguration verstellbar ist, wobei der Benutzer-Identifikationssensor nach erfolgter Benutzer-Identifikation durch die Datenverarbeitungseinheit in seine Blind-Konfiguration verstellt wird.

4. Sanitärraum nach Anspruch 3, **dadurch gekennzeichnet, dass** auf die Datenverarbeitungseinheit ein Personen-Anwesenheitssensor dergestalt wirkt, dass der Benutzer-Identifikationssensor (35) aus seiner Blind-Konfiguration in seine Erfassungs-Konfiguration verstellt wird, wenn der zuvor identifizierte Benutzer den Sanitärraum verlässt oder eine Person den Sanitärraum durch den Personen-Zugang (4) betritt.

5. Sanitärraum nach einem der Ansprüche 1 bis 4, **dadurch gekennzeichnet, dass** der Sanitärraum mindestens eine Heizeinrichtung (21) umfasst, wobei die elektronische Steuerung (40) einen zur abrufbaren Hinterlegung mehrerer unterschiedlicher Heizprogramme geeigneten Heiz-Programmspeicher (42) aufweist und die Raum-Benutzerschnittstelle (32) zur Ermöglichung einer Heizprogramm-Auswahl konfiguriert ist, wobei bevorzugt die Raum-Benutzerschnittstelle (32) die manuelle Modifikation des ausgewählten Heizprogramms ermöglicht.

6. Sanitärraum nach Anspruch 5, **dadurch gekennzeichnet, dass** die Raum-Benutzerschnittstelle (32) ein Display (74) aufweist, von dem mindestens ein Teilbereich seine Farbe in Abhängigkeit von dem aufgerufenen Beleuchtungsprogramm ändert, insbesondere indem sich die Farbe gemäß der Lichtstimmung des über die Raum-Benutzerschnittstelle (32) aufgerufenen Beleuchtungsprogramms bzw. dessen manueller Modifikation verändert.

7. Sanitärraum nach einem der Ansprüche 1 bis 6, **dadurch gekennzeichnet, dass** der Sanitärraum mindestens eine Beduftungseinrichtung (27) umfasst, wobei die elektronische Steuerung (40) einen zur abrufbaren Hinterlegung mindestens eines Beduftungsprogramms geeigneten Beduftungs-Programmspeicher (42) aufweist und die Raum-Benutzerschnittstelle (32) zur Aktivierung der Beduftungseinrichtung konfiguriert ist.

8. Sanitärraum nach Anspruch 7, **dadurch gekennzeichnet, dass** der Sanitärraum mindestens ein Fenster (29) mit einer Sichtschutz- und/oder Verdunkelungseinrichtung (30) umfasst, wobei die elektronische Steuerung (40) einen zur abrufbaren Hinterlegung mindestens eines Verdunkelungsprogramms geeigneten Verdunkelungs-Programmspeicher (42) aufweist und die Raum-Benutzerschnittstelle (32) zur Aktivierung der Sichtschutz- und/oder Verdunkelungseinrichtung (30) konfiguriert ist.

9. Sanitärraum nach einem der Ansprüche 1 bis 8, **dadurch gekennzeichnet, dass** die elektronische Steuerung (40) zur Verknüpfung von Beleuchtungsprogrammen und Soundprogrammen sowie gegebenenfalls Heizprogrammen und/oder Beduftungsprogrammen und/oder Verdunkelungsprorammen dergestalt konfiguriert ist, dass diese an der Raum-Benutzerschnittstelle (32) als komplexe Szenerieprogramme miteinander kombiniert aufrufbar sind, wobei bevorzugt ein Zeitgeber vorgesehen ist, wobei ein durch diesen generiertes Zeitsignal der zentralen Datenverarbeitungseinheit (41) zuführbar ist und eine zeitspezifische Vorselektion der an der Raum-Benutzerschnittstelle (32) zur Auswahl angebotenen Szenerieprogramme bewirkt.

10. Sanitärraum nach einem der Ansprüche 1 bis 5, **dadurch gekennzeichnet, dass** die Raum-Benutzerschnittstelle ein Display (74), einen sich um das Display (74) herum erstreckenden, um eine zum Display (74) senkrechte Achse verdrehbaren Einstellring (76) mit einer von radial außen zugänglichen Umfangs-Grifffläche und vier um den Einstellring (76) herum angeordnete Schaltflächen (73) aufweist, wobei der Einstellring (76) und/oder das Display (74) zur Betätigung eines Bestätigungs-Tasters axial bewegbar ist und die vier Schaltflächen (73) dergestalt als Programmwahl-Schaltfläche (75), als Beleuchtungs-Schaltfläche (78), als Sound-Schaltfläche (79) und als Temperatur-Schaltfläche (80) ausgeführt sind, dass durch ihre Betätigung ein durch einen Einstellring-Drehaufnehmer bereitgestelltes Signal in der zentralen Datenverarbeitungseinheit (41) im Sinne einer Szenerieprogrammselektion, einer Helligkeits-Modifikation innerhalb eines aufgerufenen Beleuchtungsprogramms, einer Lautstärke-Modifikation innerhalb eines aufgerufenen Soundprogramms und einer Temperatur-Modifikation innerhalb eines aufgerufenen Heizprogramms verarbeitet wird.

11. Sanitärraum nach Anspruch 10, **dadurch gekennzeichnet, dass** das Display (74) über einen Zentral-Anzeigebereich (82) und einen diesen ringförmig umgebenden Peripher-Anzeigebereich (85) verfügt, wobei der Peripher-Anzeigebereich (85) mindestens drei den Schaltflächen (73) räumlich zugeordnete Segmente (84) mit jeweils einer Funktionswert-Statusanzeige (89) der betreffenden Schaltflächenfunktion umfasst und durch Schaltflächen-Betätigung eine Anzeige des Momentan-Einstellwerts der betreffenden Schaltflächenfunktion in dem Zentral-Anzeigebereich (82) erfolgt.

12. Sanitärraum nach Anspruch 10 oder Anspruch 11, **dadurch gekennzeichnet, dass** die Schaltflächen (73) jeweils ein hinterleuchtetes Funktionssymbol (81) aufweisen.

13. Sanitärraum nach einem der Ansprüche 1 bis 12, **dadurch gekennzeichnet, dass** die elektronische Steuerung (40) mit einem akustischen Steuermodul ausgestattet ist, welches eine Sprachsteuerung ermöglicht.

14. Sanitärraum nach einem der Ansprüche 1 bis 13, **dadurch gekennzeichnet, dass** die Raum-Benutzerschnittstelle (32) und die mindestens eine Geräte-Benutzerschnittstelle (33) strukturell übereinstimmend ausgeführt sind.

15. Sanitärraum nach einem der Ansprüche 1 bis 14, **dadurch gekennzeichnet, dass** die elektronische Steuerung (40) eine Datenkommunikationsschnittstelle (90) umfasst, insbesondere für die Eingabe von auf einem externen Gerät (71) erstellten Programmdaten.

## Claims

1. A sanitary room of a building, having a people entrance (4), at least one sanitary station (5, 12, 16), a lighting device (34) and a sound device (25), wherein
- the sanitary station (5, 12, 16) is provided with a sanitary facility having a cold-water supply (44), a hot-water supply (45), at least one water outlet and a metering and mixing valve unit (38), which is suitable for influencing the total flow through the water outlet and the ratio of the partial quantity of cold water and the partial quantity of hot water relative to one another in the total flow, and
- a programmable electronic control system (40) acts on the metering and mixing valve unit (38), the lighting device (24) and the sound device (25),
- the programmable electronic control system (40) has a water-program memory (42) suitable for storage of several different water-delivery programs capable of being called, a lighting-program memory (42) suitable for storage of several different lighting programs capable of being called, a sound-program memory (42) suitable for storage of several different sound programs capable of being called and at least one data-processing unit (41), which actuates at least one actor of the metering and mixing valve unit (38), at least one lamp regulator and at least one sound generator;
- the sanitary station (5, 12, 16) comprises a device-user interface (33) that is associated with the sanitary facility and permits water-delivery program selection as well as manual modification of the selected water-delivery program;
**characterized in that**
- spatially separated from the device-user interface (33), adjacent to the people entrance (4), a room-user interface (32) is provided that permits lighting-program selection and sound-program selection as well as manual modification of the selected lighting program and of the selected sound program.

2. A sanitary room according to claim 1, **characterized in that** the electronic control system (40) comprises a user-identification module (34) wherein, with respect to the lighting programs and sound programs offered for selection at the room-user interface (32), as well as with respect to the water-delivery programs offered for selection at the device-user interface (33), preselection that depends on the output signal of the user-identification module (34) takes place from all water-delivery programs stored in the water program memory (42), lighting programs stored in the lighting program memory (42) and sound programs stored in the sound program memory (42), wherein preferably a standard lighting program is stored in the lighting program memory (42) and is used as long as the user-identification module (34) has not generated any output signal that can be associated with a specific registered user.

3. A sanitary room according to claim 2, **characterized in that** the user identification module (34) comprises a user-identification sensor (35), which can be adjusted between a sensing configuration and a blind configuration that can be physically distinguished therefrom, wherein the user-identification sensor will be adjusted to its blind configuration by the data-processing unit after user identification has been established.

4. A sanitary room according to claim 3, **characterized in that** a person-presence sensor acts on the data-processing unit such that the user-identification sensor (35) will be adjusted from its blind configuration to its sensing configuration when the previously identified user leaves the sanitary room or a person enters the sanitary room through the people entrance (4).

5. A sanitary room according to one of claims 1 to 4, **characterized in that** the sanitary room comprises at least one heating device (21), wherein the electronic control system (40) has a heating-program memory (42) suitable for storage of several different heating programs capable of being called and the room-user interface (32) is configured to enable a heating-program selection, wherein preferably the room-user interface (32) permits manual modification of the selected heating program.

6. A sanitary room according to claim 5, **characterized in that** the room-user interface (32) has a display (74), of which at least one partial region changes its color in dependence on the called lighting program, especially by the fact that the color changes according to the lighting mood of the lighting program called via the room-user interface (32) or to manual modification thereof.

7. A sanitary room according to one of claims 1 to 6, **characterized in that** the sanitary room comprises at least one fragrance-imparting device (27), wherein the electronic control system (40) has a fragrance-imparting-program memory (42) suitable for storage of at least one fragrance-imparting program and the room-user interface (32) is configured for activation of the fragrance-imparting device.

8. A sanitary room according to claim 7, **characterized in that** the sanitary room comprises at least one window (29) having a privacy screen and/or blackout device (30), wherein the electronic control system (40) has a blackout-program memory (42) suitable for storage of at least one blackout program capable of being called and the room-user interface (32) is configured for activation of the privacy-screen and/or blackout device (30).

9. A sanitary room according to one of claims 1 to 8, **characterized in that** the electronic control system (40) is configured for linking of lighting programs and sound programs and if applicable also of heating programs and/or fragrance-imparting programs and/or blackout programs in such a way that these can be called at the room-user interface (32) in combination with one another as complex scenario programs, wherein preferably a timer is provided, wherein a time signal generated thereby can be supplied to the central data-processing unit (41) to bring about a time-specific preselection of the scenario programs offered for selection at the room-user interface (32).

10. A sanitary room according to one of claims 1 to 5, **characterized in that** the room-user interface has a display (74), a setting-selector ring (76) extending around the display (74) and capable of being turned around an axis perpendicular to the display (74), with a circumferential gripping face accessible from radially outside, and four buttons (73) disposed around the setting-selector ring (76), wherein the setting-selector ring (76) and/or the display (74) can be shifted axially for actuation of a confirmation switch and the four buttons (73) are designed as program-selection button (75), as lighting button (78), as sound button (79), and as temperature button (80), such that, upon their actuation, a signal supplied by a rotary-position transducer of the setting-selector ring is processed in the central data-processing unit (41) in the sense of a scenario-program selection, a brightness modification within a called lighting program, a loudness modification within a called sound program and a temperature modification within a called heating program.

11. A sanitary room according to claim 10, **characterized in that** the display (74) is provided with a central display region (82) and a peripheral display region (85) surrounding it annularly, wherein the peripheral display region (85) comprises at least three segments (84) associated spatially with the buttons (73) and having respectively a function-value status display (89) of the button function in question, and upon button actuation a display of the instantaneous setting value of the button function in question appears in the central display region (82).

12. A sanitary room according to claim 10 or claim 11, **characterized in that** the buttons (73) respectively have a backlit function symbol (81).

13. A sanitary room according to one of claims 1 to 12, **characterized in that** the electronic control system (40) is equipped with an acoustic control module, which permits voice control.

14. A sanitary room according to one of claims 1 to 13, **characterized in that** the room-user interface (32) and the at least one device-user interface (33) are designed structurally identical.

15. A sanitary room according to one of claims 1 to 14, **characterized in that** the electronic control system (40) comprises a data-communication interface (90), especially for inputting program data created on an external device (71).

## Revendications

1. Local sanitaire d'un bâtiment, doté d'un accès (4) dédié aux personnes, d'au moins un poste sanitaire (5, 12, 16), d'un système d'éclairage (24) et d'un système sonore (25),
- le poste sanitaire (5, 12, 16) comportant un système sanitaire, doté d'une arrivée (44) d'eau froide, d'une arrivée (45) d'eau chaude, d'au moins une sortie d'eau et d'une unité de valve de dosage et de mélange (38), laquelle est adaptée pour influencer le débit total à travers la sortie d'eau et le rapport mutuel de la quantité partielle d'eau froide et de la quantité partielle d'eau chaude au débit total,
- un système de commande (40) électronique programmable agissant sur l'unité de valve de dosage et de mélange (38), le système d'éclairage (24) et le système sonore (25),
- le système de commande (40) électronique programmable comportant une mémoire de programme (42) de gestion de l'eau, adaptée pour la sauvegarde interrogeable de différents programmes de distribution d'eau, une mémoire de programme (42) de gestion de l'éclairage, adaptée pour la sauvegarde interrogeable de différents programmes d'éclairage, une mémoire de programme (42) de gestion sonore, adaptée pour la sauvegarde interrogeable de différents programmes sonores et au moins une unité de traitement de données (41), laquelle actionne au moins un actionneur de l'unité de valve de dosage et de mélange (38), au moins un régulateur d'éclairage et au moins un générateur de sons et
- le poste sanitaire (5, 12, 16) comprenant une interface utilisateur (33) de gestion des appareils, affectée au système sanitaire, permettant de sélectionner le programme de distribution d'eau, ainsi que de modifier manuellement le programme de distribution d'eau sélectionné ;
**caractérisé en ce que**
- séparée dans l'espace de l'interface utilisateur (33) de gestion des appareils, au voisinage de l'accès (4) dédié aux personnes est prévue une interface utilisateur (32) de gestion du local, permettant de sélectionner le programme d'éclairage et le programme sonore, ainsi que de modifier manuellement le programme d'éclairage sélectionné et le programme sonore sélectionné.

2. Local sanitaire selon la revendication 1, **caractérisé en ce que** le système de commande (40) électronique comprend un module d'identification (34) de l'utilisateur, en ce qui concerne les programmes d'éclairage et les programmes sonores proposés à la sélection sur l'interface utilisateur (32) de gestion du local et en ce qui concerne les programmes de distribution d'eau proposés à la sélection sur l'interface utilisateur (33) de gestion des appareils, une présélection dépendant du signal de sortie du module d'identification (34) de l'utilisateur parmi l'ensemble des programmes de distribution d'eau sauvegardés dans la mémoire de programme (42) de gestion de l'eau, des programmes d'éclairage sauvegardés dans la mémoire de programme (42) de gestion de l'éclairage et des programmes sonores sauvegardés dans la mémoire de programme (42) de gestion sonore étant effectuée, de préférence dans la mémoire de programme (42) de gestion de l'éclairage étant sauvegardé un programme d'éclairage standard, lequel est utilisé aussi longtemps que le module d'identification (34) de l'utilisateur ne génère aucun signal de sortie susceptible d'être affecté à un utilisateur spécifique enregistré.

3. Local sanitaire selon la revendication 2, **caractérisé en ce que** le module d'identification (34) de l'utilisateur comprend un capteur d'identification (35) de l'utilisateur, lequel est réglable entre une configuration de détection et une configuration aveugle physiquement distinguable de celle-ci, une fois l'utilisateur identifié, le capteur d'identification de l'utilisateur étant réglé dans sa configuration aveugle par l'unité de traitement de données.

4. Local sanitaire selon la revendication 3, **caractérisé en ce que** sur l'unité de traitement de données, un capteur de présence de personne agit de telle sorte que le capteur d'identification (35) de l'utilisateur soit réglé de sa configuration aveugle dans sa configuration de détection lorsque l'utilisateur précédemment identifié quitte le local sanitaire ou lorsqu'une personne entre dans le local sanitaire par l'accès (4) dédié aux personnes.

5. Local sanitaire selon l'une quelconque des revendications 1 à 4, **caractérisé en ce que** le local sanitaire comprend au moins un système de chauffage (21), le système de commande (40) électronique comportant une mémoire de programme (42) de gestion du chauffage, adaptée pour la sauvegarde interrogeable de plusieurs programmes de chauffage différents et l'interface utilisateur (32) de gestion du local étant configurée pour permettre de sélectionner un programme de chauffage, de préférence l'interface utilisateur (32) de gestion du local permettant de modifier manuellement le programme de chauffage sélectionné.

6. Local sanitaire selon la revendication 5, **caractérisé en ce que** l'interface utilisateur (32) de gestion du local comporte un écran (74), duquel au moins une zone partielle change de couleur en fonction du programme d'éclairage sélectionné, notamment **en ce que** la couleur varie selon l'ambiance lumineuse du programme d'éclairage appelé par l'intermédiaire de l'interface utilisateur (32) de gestion du local ou de sa modification manuelle.

7. Local sanitaire selon l'une quelconque des revendications 1 à 6, **caractérisé en ce que** le local sanitaire comprend au moins un diffuseur de parfum (27), le système de commande (40) électronique comportant une mémoire de programme (42) de gestion de la diffusion de parfum, adapté pour la sauvegarde interrogeable d'au moins un programme de diffusion de parfum et l'interface utilisateur (32) de gestion du local étant configurée pour activer le diffuseur de parfum.

8. Local sanitaire selon la revendication 7, **caractérisé en ce que** le local sanitaire comprend au moins une fenêtre (29), dotée d'un système brise-vue et / ou d'occultation (30), le système de commande (40) électronique comportant une mémoire de programme (42) de gestion de l'occultation, adaptée pour la sauvegarde interrogeable d'au moins un programme d'occultation et l'interface utilisateur (32) de gestion du local étant configurée pour activer le système brise-vue et / ou d'occultation (30).

9. Local sanitaire selon l'une quelconque des revendications 1 à 8, **caractérisé en ce que** pour interconnecter des programmes d'éclairage et des programmes sonores, ainsi que le cas échéant des programmes de chauffage et / ou des programmes de diffusion de parfum et / ou des programmes d'occultation, le système de commande (40) électronique est configuré de telle sorte que ceux-ci puissent être appelés conjointement sur l'interface utilisateur (32) de gestion du local en tant que programmes de scénarios complexe, de préférence une minuterie étant prévue, un signal de temps généré par celle-ci étant transférable vers l'unité centrale de traitement de données (41) et provoquant une présélection spécifique au temps des programmes de scénarios proposés à la sélection sur l'interface utilisateur (32) de gestion du local.

10. Local sanitaire selon l'une quelconque des revendications 1 à 5, **caractérisé en ce que** l'interface utilisateur de gestion du local comporte un écran (74), une bague d'ajustage (76) s'étendant autour de l'écran (74), rotative autour d'un axe perpendiculaire à l'écran (74), dotée d'une surface de préhension périphérique accessible par l'extérieur en direction radiale et de quatre boutons (73) placés autour de la bague d'ajustage (76), pour actionner une touche de confirmation, la bague d'ajustage (76) et / ou l'écran (74) étant déplaçable en direction axiale et les quatre boutons (73) étant conçus en tant que bouton (75) de sélection de programme, en tant que bouton (78) de gestion de l'éclairage, en tant que bouton (79) de gestion sonore et en tant que bouton (80) de gestion de la température, de telle sorte que par leur actionnement, un signal mis à disposition par un détecteur de rotation de la bague d'ajustage soit traité dans l'unité centrale de traitement de données (41) dans le sens d'une sélection d'un programme de scénarios, d'une modification de la luminosité au sein d'un programme d'éclairage appelé, d'une modification du niveau sonore au sein d'une programme sonore appelé et d'une modification de la température au sein d'un programme de chauffage appelé.

11. Local sanitaire selon la revendication 10, **caractérisé en ce que** l'écran (74) dispose d'une zone d'affichage (82) centrale et d'une zone d'affichage (85) périphérique, entourant celle-ci en forme d'anneau, la zone d'affichage (85) périphérique comprenant au moins trois segments (84), affectés dans l'espace aux boutons (73), dotés chacune d'un affichage d'état (89) de valeur fonctionnelle de la fonction concernée du bouton et par actionnement du bouton, un affichage de la valeur de réglage momentanée de la fonction concernée du bouton s'effectuant dans la zone d'affichage (82) centrale.

12. Local sanitaire selon la revendication 10 ou la revendication 11, **caractérisé en ce que** les boutons (73) comportent chacun un symbole fonctionnel (81) rétro-éclairé.

13. Local sanitaire selon l'une quelconque des revendications 1 à 12, **caractérisé en ce que** le système de commande (40) électronique est équipé d'un module de commande acoustique, lequel permet une commande vocale.

14. Local sanitaire selon l'une quelconque des revendications 1 à 13, **caractérisé en ce que** l'interface utilisateur (32) de gestion du local et l'au moins une interface utilisateur (33) de gestion des appareils sont conçues en concordance structurelle.

15. Local sanitaire selon l'une quelconque des revendications 1 à 14, **caractérisé en ce que** le système de commande (40) électronique comprend une interface de communication (90) de données, notamment destinée à la saisie de données de programme établies sur un appareil (71) externe.
